# EUROPEAN PATENT APPLICATION

(11) **EP 4 818 129 A1**
(43) Date of publication of application: **07.10.2026**
(21) Application number: 25183117.8
(22) Date of filing: 16.06.2025
(51) Int. Cl.: C03B 23/09

(54) **COOLING METHOD AND APPARATUS FOR FLAME SEALING METHOD OF GLASS CAPILLARY**

(30) Priority: 03.04.2025 CN 202510419556; 10.04.2025 CN 202510447213
(71) Applicant: East China University Of Science And Technology, Shanghai 200237 (CN); Suzhou Huache Safety Technology Co., Ltd, Suzhou, Jiangsu 215128 (CN)
(72) Inventor: SHENG, Min, Shanghai, 200237 (CN); WANG, Fangfang, Shanghai, 200237 (CN); LI, Weiye, Shanghai, 200237 (CN); ZHANG, Kai, Suzhou City, 215128 (CN); LI, Jing, Suzhou City, 215128 (CN); YUAN, Qian, Suzhou City, 215128 (CN); SHI, Jun, Suzhou City, 215128 (CN); DENG, Yiqiang, Shanghai, 200237 (CN)
(74) Representative: Valet Patent Services Limited

(57) **Abstract**

The present disclosure provides a cooling method and apparatus for a flame sealing method of a glass capillary. The cooling apparatus includes a fixing component for carrying the glass capillary, wherein a groove for connecting the glass capillary is provided in an upper surface of the fixing component, and the depth of the groove is smaller than the length of the glass capillary; a cooling portion used for indirectly cooling the glass capillary and capable of cooling the fixing component to be not higher than -30°C within 5min to 20min, wherein the cooling portion includes a first cooling component located below the fixing component, wherein the first cooling component includes a multi-stage series-connected electric cooler; a thermally-conductive metal plate located below the first cooling component; a second cooling component located below the thermally-conductive metal plate, wherein the second cooling component includes a multi-stage parallel-connected electric cooler; and a thermally-dissipative component connected to a lower surface of the second cooling component. The cooling apparatus can keep the temperature of the loaded chemical being below 0°C during the flame sealing of the glass capillary, is simple in structure and high in operation safety, and can be reused.

## Description

### TECHNICAL FIELD

The present disclosure belongs to the technical field of chemical analysis, and particularly relates to a cooling method and apparatus for a flame sealing method of a glass capillary.

### BACKGROUND

A to-be-tested sample is processed by employing a flame sealing method of a glass capillary, which can be applied to thermal stability analysis of chemicals with a differential scanning calorimetry (DSC) and component analysis of the chemicals with a pyrolysis GC-MS (Py-GC-MS). The method has obvious advantages over other sample preparation methods.

During the thermal stability analysis of the chemicals with the DSC, a flame-sealed glass capillary can effectively seal a sample, so as to prevent highly-volatile, easily-oxidizable or easily-decomposable chemicals from being affected by external factors in a heating process, ensure the testing accuracy, and particularly significantly improve the accuracy of measuring high-energy explosives. The flame-sealed glass capillary provides an inert environment which is particularly suitable for the chemicals which are sensitive to oxidization or are decomposed at high temperature, so as to prevent the chemicals from reacting with oxygen and moisture in air. In addition, a sealed structure of the flame-sealed glass capillary enables the release of gases (for example, pyrolysis gases) to be efficiently controlled, thereby preventing the gases from interfering with a DSC sensor, and providing more stable heat flow data.

In the component analysis with the Py-GC-MS, employing the flame-sealed glass capillary to feed the sample into a container can effectively avoid harsh requirements of sealing an assembly at high temperature and high pressure for other methods. Then, the flame-sealed glass capillary is excellent in sealing performance, and can effectively seal the sample, so as to prevent highly-volatile or easily-oxidizable substances from being affected by external gases in a pyrolysis process and ensure the integrity of the sample. Furthermore, the flame-sealed glass capillary can accurately control the release time of the pyrolysis gases by breaking glass. Many samples will release the gases in the pyrolysis process. The sealed glass capillary effectively inhibits the gases from leaking, and avoids signal interference to a GC-MS system, thereby providing more stable and clearer analysis data. Moreover, the flame-sealed glass capillary is easy to operate and is suitable for rapid analysis of a small amount of samples, which is particularly important for qualitative analysis.

When the glass capillary is sealed, the sealing purpose is realized generally by sealing (thermally closing) the glass with high-temperature flame. During the specific operation, a to-be-tested chemical is placed on one end of the glass capillary, and the other end of the glass capillary is molten and closed by using flame exceeding approximately 1000°C. Under a condition of a flame sealing temperature, heat at the molten end is easily conducted to the other end through a wall of the glass capillary. As such, the temperature of the to-be-tested chemical is increased and the pyrolysis risk will be caused. Therefore, how to promptly remove the transfer of the heat from the glass capillary to an end loaded with a sample in a thermal closing process is an urgent problem to be solved.

In addition, it is worth noting that the amount of the to-be-tested chemical (sample) used in the analysis with the DSC or GC-MS (Py-GC-MS) is usually only at a milligram level, such that the glass capillary is small in size, which is favorable for rapid transfer of the heat from one end of a glass section to the other end thereof, but is not favorable for dissipation of the heat based on the heat transfer area of the glass capillary of such a small size, and further increases the difficulty of rapidly cooling the glass capillary during the thermal closing.

An existing cooling operation of preventing the chemicals from being decomposed by heating during the flame sealing of the glass capillary mainly includes a liquid nitrogen cooling method, a dry ice cooling method and the like. It is worth noting that using liquid nitrogen or dry ice for cooling is complicated in operation and has a risk of low-temperature burns in a process of thermally closing the glass capillary. In addition, absorbing a large amount of oxygen during the gasification of the liquid nitrogen or releasing carbon dioxide during the sublimation of the dry ice may threaten the life safety of operators. Moreover, the liquid nitrogen and the dry ice can not be reused and more complicated in transportation and storage, such that the cost of the liquid nitrogen cooling method or the dry ice cooling method is higher.

### BRIEF SUMMARY

In view of the deficiencies in the prior art, the present disclosure discloses a cooling method and apparatus for a flame sealing method of a glass capillary, which can promptly perform thermal dissipation in a flame sealing process of the glass capillary and keep a temperature of loaded chemicals being below 0°C. The cooling apparatus is easy to operate and high in safety, and effectively reduces the cost of the process.

In order to achieve the technical purpose, in an aspect, the present disclosure provides a cooling apparatus for the flame sealing method of the glass capillary. The cooling apparatus includes a fixing component used for carrying the glass capillary, wherein a groove for connecting the glass capillary is provided in an upper surface of the fixing component, and the depth of the groove is smaller than the length of the glass capillary; a cooling portion used for indirectly cooling the glass capillary and capable of cooling the fixing component to be not higher than -30°C within 5min to 20min, wherein the cooling portion includes a first cooling component located below the fixing component and being in contact with a lower surface of the fixing component, wherein the first cooling component includes a multi-stage series-connected electric cooler; a thermally-conductive metal plate located below the first cooling component and being in contact with a lower surface of the first cooling component; a second cooling component located below the thermally-conductive metal plate and being in contact with a lower surface of the thermally-conductive metal plate, wherein the second cooling component includes a multi-stage parallel-connected electric cooler; and a thermally-dissipative component connected to a lower surface of the second cooling component.

The research and development team of the present disclosure has found after a large number of experiments that by combining the first cooling component including the multi-stage series-connected electric cooler and the second cooling component including the multi-stage parallel-connected electric cooler to cool the fix component, the fixing component can be cooled to be not higher than -30°C within 20min. In the technical solution, the groove is provided in the fixing component for carrying the glass capillary, one end of the glass capillary loaded with the to-be-tested chemical is placed in the groove when the glass capillary is thermally closed and the other end of the glass capillary extends out for being molten and closed, such that one end of the glass capillary loaded with the chemical can be kept in a temperature range of being not higher than 0°C in a thermal closing process, and the heat conducted from the glass capillary to the end loaded with the sample can be removed efficiently within approximately 30s, which prevents the chemicals from being thermally decomposed at high temperature in the thermal closing process and therefore ensure the subsequent testing accuracy and safety.

In addition, in the technical solution, since a contact surface between the fixing component for holding and fixing the glass capillary and the first cooling component is small, providing the first cooling component including the multi-stage series-connected electric cooler can rapidly increase the temperature difference to rapidly cool the glass capillary. Furthermore, in combination of the enhancement of the cooling contact surface by the thermally-conductive metal plate, providing the second cooling component including the multi-stage parallel-connected electric cooler can rapidly increase the cooling capacity. By means of the cooperation of the two cooling components, the cooling time is effectively shortened, and the heat conducted from the glass capillary is quickly removed during the flame sealing of the glass capillary.

During a specific thermal closing operation, it is optional to place a portion of the glass capillary loaded with chemicals at a bottom in the groove of the fixing component, and the other portion of the glass capillary loaded with no chemicals extends out of the groove for being thermally molten and closed. The heat of the fixing component is transferred to the thermally-conductive metal plate through the first cooling component, the heat of the thermally-conductive metal plate is transferred to the thermally-dissipative component through the second cooling component, and finally, the heat will be dissipated through the thermally-dissipative component.

It should be noted that the electric cooler of the present disclosure is a thermoelectric semiconductor cooling assembly.

In a further example of the present disclosure, the number of stages and control parameters of the electric coolers included in the first cooling component and the second cooling component are explored and optimized, and the thermal conductivity coefficient, thickness and the like of the thermally-conductive metal plate are explored and optimized, such that the cooling efficiency of the cooling apparatus for the flame sealing method of the glass capillary of the present disclosure is further improved.

In another aspect, the present disclosure provides a flame sealing method of a glass capillary. The method includes pre-processing and thermal closing, wherein
the pre-processing operation includes the following steps:
S1, placing one end of a glass capillary loaded with a to-be-tested sample in a groove of a fixing component of the cooling apparatus for the flame sealing method of the glass capillary and making the other end of the glass capillary extend out of the groove; and
S2, activating a first cooling component and a second cooling component to cool the fixing component to be not higher than -30°C, so as to obtain a to-be-closed glass capillary.

The thermal closing operation includes: melting and sealing a portion of the to-be-sealed glass capillary extending out of the groove by employing high-temperature flame.

The flame sealing method of the glass capillary of the present disclosure can keep a temperature of the chemical loaded in the glass capillary being not higher than 0°C during the thermal closing operation, thereby effectively preventing the chemicals from being decomposed by heating. Optionally, after the first cooling component and the second cooling component are activated in the step S2, the fixing component may be cooled to be not higher than -30°C within no more than 20min. Further optionally, after the first cooling component and the second cooling component are activated in the step S2, the fixing component may be cooled to be not higher than -30°C within 5min to 20min.

In yet another aspect, the present disclosure provides another flame sealing method of a glass capillary. The method includes pre-processing and thermal sealing, wherein
the pre-processing operation includes the following steps:
step 1, activating a first cooling component and a second cooling component to cool a fixing component of the cooling apparatus for the flame sealing method of the glass capillary to be not higher than -30°C; and
step 2, placing one end of the glass capillary loaded with a to-be-tested sample in a groove of the fixing component and making the other end of the glass capillary extend out of the groove, and obtaining a to-be-closed glass capillary after the temperature of the fixing component is stabilized.

The thermal closing operation includes: melting and sealing a portion of the to-be-closed glass capillary extending out of the groove by employing high-temperature flame.

The flame sealing method of the glass capillary of the present disclosure can keep the temperature of the chemicals loaded in the glass capillary being not higher than 0°C during the thermal closing operation, thereby effectively preventing the chemicals from being decomposed by heating. Optionally, in the step 1, the fixing component may be cooled to be not higher than -30°C within no more than 20min. Further, the fixing component may be cooled to be not higher than -30°C within 5min to 20min.

Compared with the prior art, the present disclosure has the beneficial effect that: the cooling apparatus for the flame sealing method of the glass capillary of the present disclosure can rapidly cool the fixing component to be not higher than -30°C, and promptly and efficiently remove the heat conducted from the glass capillary to the end loaded with the sample during the flame sealing of the glass capillary, so as to keep the temperature of the loaded chemicals being below 0°C. The apparatus is simple in structure and high in operation safety, and can be reused. The flame sealing method of the glass capillary employing the cooling apparatus for the flame sealing method of the glass capillary of the present disclosure is convenient to operate, low in cost and excellent in practicability, and has important popularization and application values.

### BRIEF DESCRIPTION OF THE DRAWINGS

Figures of the description, which form a part of the present application, are used to provide a further understanding of the present disclosure. Schematic embodiments of the present disclosure and their descriptions are used to explain the present disclosure and do not constitute an improper limitation of the present disclosure. In the figures,
FIG. 1 shows an influence of different combination manners of electric coolers on a temperature change of a fixing component in an exploration experiment;
FIG. 2 shows a structural diagram of a cooling apparatus for a flame sealing method of a glass capillary the present disclosure;
FIG. 3 shows another structural diagram of a cooling apparatus for a flame sealing method of a glass capillary of the present disclosure;
FIG. 4 shows an influence of a combined electric cooler of a multi-stage series-connected electric cooler and a multi-stage parallel-connected electric cooler on a temperature change of a fixing component and a sample within a glass capillary in an exploration experiment;
FIG. 5 shows an influence of different thicknesses of a buffer cooling plate on a temperature change of a fixing component in an example 3;
FIG. 6 shows a temperature change of a fixing component and a sample within a glass capillary during a pre-processing operation in an example 4; and
FIG. 7 shows a temperature change of a fixing component and a sample with a glass capillary during the flame sealing in an example 4.

Among them, the figures include the following reference symbols:
1-fixing component, 11-groove, 12-insulation housing, 2-first cooling component, 3-thermally-conductive metal plate, 4-second cooling component, 5-thermally-dissipative component, 51-thermally-dissipative base, and 52-thermally-dissipative copper capillary.

### DETAILED DESCRIPTION OF THE DISCLOSURE

In order to facilitate the understanding of the present disclosure, the present disclosure will be more comprehensively described below, and preferred embodiments of the present disclosure will be given. However, it should be understood that these embodiments are merely for the purpose of more detailed description, and should not be construed as being used to limit the present disclosure in any form, that is, not intended to limit the scope of protection of the present disclosure.

Unless otherwise defined, technical terms used in the following embodiments have the same meaning as those generally understood by those skilled in the art to which the present disclosure belongs. Unless otherwise specified, test reagents used in the following embodiments are conventional biochemical reagents. Unless otherwise specified, experimental methods are conventional methods.

### Exploratory experiment

The technology of cooling a material by using an electric cooler has been reported. The material can be cooled to approximately 25°C to 28°C when being in direct contact with the electric cooler. However, with respect to a flame sealing process of the glass capillary, it is more difficult to operate the glass capillary to be in direct contact with the electric cooler in order to prevent a chemical from being heated. For this reason, the research and development team proposed a spaced cooling method of using a fixing component 1 to be in contact with an electric cooler, which realizes the control of the temperature of a sample inside the glass capillary by cooling the fixing component 1 with the electric cooler. The fixing component includes a base being in contact with the electric cooler, and a groove 11 for holding and fixing a portion of the glass capillary. When the glass capillary is sealed, one end loaded with the sample is placed in the groove 11, and the other end of the glass capillary extends out of the groove for being ignited, molten and closed with flame.

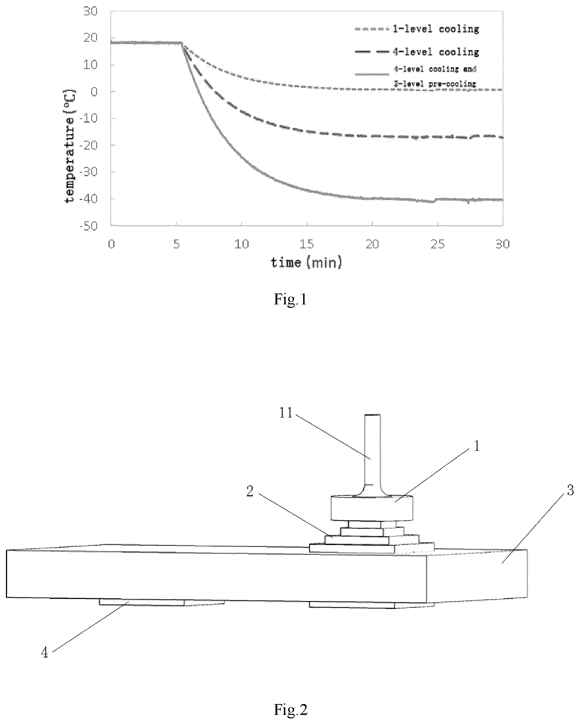

Further, the research and development team explored an influence of combination manners of electric coolers on a temperature change of the fixing component 1, and explored a cooling effect of a one-stage electric cooler, a multi-stage series-connected electric cooler and a combined electric cooler of a multi-stage series-connected electric cooler and a multi-stage parallel-connected electric cooler. In a testing process, the electric coolers were in contact with the fixing component 1, and the temperature was detected by a thermometer located within a base of the fixing component 1. Among them, the one-stage electric cooler has a voltage of 12V and a power of 100W. A four-stage series-connected electric cooler has a voltage of 12V and a power of 80W. A two-stage parallel-connected electric cooler has a voltage of 12V and a power of 200W. In an exploratory example of a combined electric cooler four-stage series-connected electric cooler and a two-stage parallel-connected electric cooler, one side of the four-stage series-connected electric cooler is in contact with the fixing component 1 and the other side thereof is in contact with the thermally-conductive metal plate 3, while the other side of the thermally-conductive metal plate 3 is in contact with the two-stage parallel-connected electric cooler. The combination manners of the electric coolers and cooling testing results are shown in FIG. 1.

FIG. 1 shows unexpected testing results. ① A power of the electric cooler is not directly proportional to a cooling effect of the electric cooler on the fixing component 1 and the sample within the glass capillary. Specifically, it can be seen from the cooling effect of the one-stage electric cooler and the four-stage series-connected electric cooler that although the one-stage electric cooler has a large cooling power, the one-stage electric cooler is cooled only from 18.5°C to 0.5°C within 20min. As a result, it is speculated that the cooling effect of the electric cooler might be related to a fact that the cooling efficiency of the electric cooler is decreased as a temperature difference between a hot surface and a cold surface is increased. However, although the four-stage series-connected electric cooler has a relatively small power, the four-stage series-connected electric cooler is cooled from 18.5°C to -17°C within 20min. ② The cooling effect of the electric coolers can be further improved by employing the combination manner of the series-connected electric cooler and the parallel-connected electric cooler. Particularly, it can be confirmed from the cooling effect of the four-stage series-connected electric cooler and a combined electric cooler of the four-stage series-connected electric cooler and the two-stage parallel-connected electric cooler that although the temperature difference between the hot surface and the cold surface is greatly reduced since the four-stage series-connected electric cooler makes the temperature difference between the hot surface and the cold surface of the electric cooler is divided equally, the cooling efficiency is improved. As a result, compared to the one-stage electric cooler, the four-stage series-connected electric cooler is further cooled within 20min, but has the cooling temperature staying at approximately -17°C. However, the combined electric cooler of the four-stage series-connected electric cooler and the two-stage parallel-connected electric cooler integrating the series-connected electric cooler and the parallel-connected electric cooler is rapidly and efficiently cooled, and the fixing component 1 is cooled from 18.5°C to -30°C only after 6.5min after the electric cooler is activated, a stable state is reached after 20min, and the combined electric cooler is higher in rapid cooling efficiency, and exhibits excellent cooling effect.

Based on results and findings of the exploratory experiment, the research and development team proposed the technical solution of the present disclosure.

### Example 1

A cooling apparatus for a flame sealing method of a glass capillary, as shown in FIG. 2 (a thermally-dissipative component 5 is not shown in the figure for brevity), includes a fixing component 1 for carrying the glass capillary, wherein a groove for connecting the glass capillary is provided in an upper surface of the fixing component 1, and the depth of the groove is less than the length of the glass capillary; a cooling portion used for indirectly cooling the glass capillary and capable of cooling the fixing component 1 to be not higher than -30°C within 5min to 20min, wherein the cooling portion includes a first cooling component 2 located below the fixing component 1 and being in contact with a lower surface of the fixing component 1, wherein the first cooling component 2 includes a multi-stage series-connected electric cooler; a thermally-conductive metal plate 3 located below the first cooling component 2 and being in contact with a lower surface of the first cooling component 2; a second cooling component 4 located below the thermally-conductive metal plate 3 and being in contact with a lower surface of the thermally-conductive metal plate 3, wherein the second cooling component 4 includes a multi-stage parallel-connected electric cooler; and a thermally-dissipative component 5 connected to a lower surface of the second cooling component 4.

In an actual flame sealing process of the glass capillary, the glass capillary loaded with a chemical sample is placed in the groove of the fixing component 1, such that the portion of the glass capillary portion loaded with the sample is fixed and held in the groove 11, while the portion of the glass capillary loaded with no chemical extends out of the groove for subsequently molten and sealed with flame. In a sealing process, heat in the fixing component 1 is transferred sequentially through the first cooling component 2, the thermally-conductive metal plate 3 and the second cooling component 4 to the thermally-dissipative component 5, and finally dissipated through the thermally-dissipative component 5.

The cooling apparatus for the flame sealing method of the glass capillary of the present disclosure is capable of cooling the fixing component to be not higher than -30°C through the cooperation of a plurality of cooling components within 20min, preferably, within 5min to 20min. Meanwhile, the sample loaded in the glass capillary is cooled by means of the contact between the fixing component 1 and the glass capillary, and the temperature of the loaded sample is kept being below 0°C in a flame sealing process of the glass capillary, such that the chemical is effectively prevented from being thermally decomposed by heating in the flame sealing process of the glass capillary, and the subsequent analysis and detection accuracy and safety are improved.

Optionally, a thermal paste or thermal silicone grease is disposed on a contact surface of the fixing component 1 and the first cooling component 2.

Optionally, a thermal paste or thermal silicone grease is disposed on a contact surface between the first cooling component 2 and the thermally-conductive metal plate 3 or a contact surface between the thermally-conductive metal plate 3 and the second cooling component 4.

Optionally, the first cooling component 2 includes a two-stage series-connected electric cooler through a six-stage series-connected electric cooler which is capable of cooling the fixing component to be below -30°C within 20min, and further optionally, a four-stage series-connected electric cooler.

Optionally, the first cooling component 2 has a voltage of 5V to 36V and a power of 40W to 150W, and further optionally, the first cooling component 2 has a voltage of 12V and a power of 80W.

Optionally, the second cooling component 4 includes a two-stage parallel-connected electric cooler through a four-stage parallel-connected electric cooler which should keep the temperature of the thermally-conductive metal plate being not higher than 30°C when the first cooling component operates at full power, and further optionally, a two-stage parallel-connected electric cooler.

Optionally, the second cooling component 4 has a voltage of 5V to 36V and a power of 60W to 250W, and further optionally, the second cooling component 4 has a voltage of 12V and a power of 200W.

In order to improve the stability when the glass capillary is carried, optionally, the fixing component 1 further includes a fastener for socketing an upper end of the groove 11 and a portion of a glass column, thereby providing a supporting function for the glass capillary after the glass capillary is placed in the fixing component 1, so as to make the glass capillary more stable and facilitate subsequent high-temperature melting and closing operations of the glass capillary. It should be noted that the present disclosure does not limit a specific connection manner of the fastener and the groove 11, such as optional threaded connection, snap-in connection, plug-in connection and the like, which may be selected by those skilled in the art as required in actual use, and does not limit the scope of protection of the present disclosure. It should be understood that the height of the groove 11 is affected by the length of the glass capillary placed in the groove 11, such that the present disclosure does not limit the height of the groove 11, which can be set by those skilled in the art as actually required.

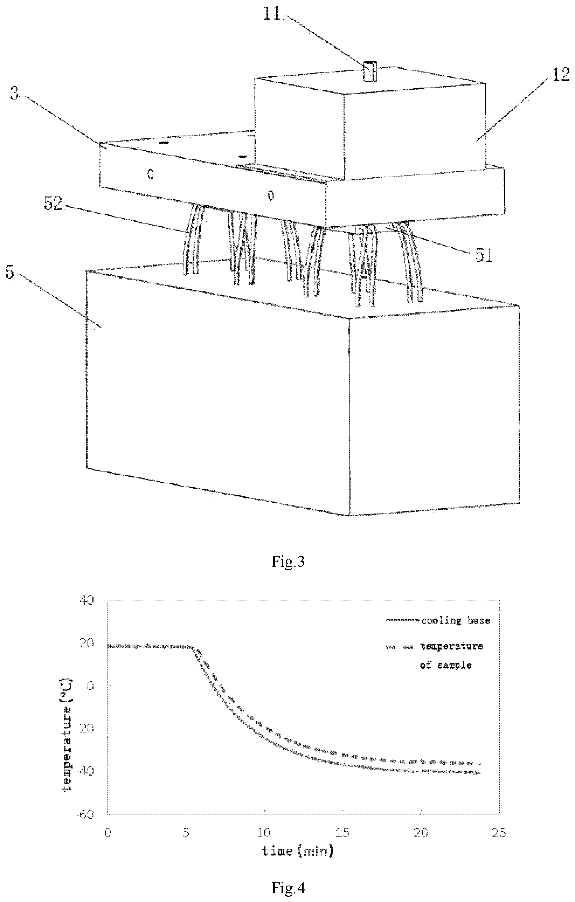

Optionally, as shown in FIG. 3, the fixing component 1 is externally provided with an insulation housing 12, thereby preventing a cooling capacity provided by the cooling portion from being dispersed, so as to improve the cooling stability and ensure the cooling effect of the fixing component 1.

It should be noted that the present disclosure does not limit a specific structure of the thermally-dissipative component 5, and those skilled in the art may select a suitable thermally-dissipative component for dissipating heat transferred to the second cooling component 4 as required, optionally, such as a fan radiator, a liquid-cooled radiator or a heat pipe radiator and the like. For instance, in FIG. 3, there is shown an optional form of dissipating the heat by using a CPU thermally-dissipative component 5, wherein the second cooling component 4 is connected to a thermally-dissipative base 51, and the thermally-dissipative base 51 is connected to a radiator and a fan via a thermally-dissipative copper pipe 52.

It should be noted that the present disclosure does not limit a specific material of the fixing component 1, and optionally may use a material with high thermal conductivity and a certain degree of hardness, such as copper, aluminum, silver or graphite. In view of the cost, the material of the fixing component 1 of the present disclosure is preferably aluminum.

### Example 2

The present example explored a cooling effect on the glass capillary by using the cooling apparatus for the flame sealing method of the glass capillary shown in the example 1 under a specific working condition. The temperature of the fixing component 1 is detected by a thermometer within a base of the fixing component, and the temperature of the sample is detected by a vacuum seal and a thermometer at a bottom of the glass capillary.

Particularly, the exploratory experiment employed a first cooling component 2 including a four-stage series-connected electric cooler, wherein the first cooling component 2 has an upper portion connected to a bottom of the fixing component 1 and a lower portion connected to a thermally-conductive metal plate 3; and a second cooling component 4 including a two-stage parallel-connected electric cooler, wherein the second cooling component 4 has an upper portion connected to the thermally-conductive metal plate 3 and a lower portion connected to the thermally-dissipative component, particularly, a CPU thermally-dissipative component. The electric cooler in the first cooling component 2 has a voltage of 12V and a power of 80W. The electric cooler of the second cooling component 4 has a voltage of 12V and a power of 100W. The thermally-conductive metal plate 3 is an aluminum plate, and has a thickness of 20mm. Experimental results are shown in FIG. 4.

It can be confirmed from FIG. 4 that when the fixing component 1 is cooled by employing the combined electric cooler of the multi-stage series-connected electric cooler and the multi-stage parallel-connected electric cooler, the fixing component 1 is cooled from 18.5°C to approximately -30°C only after 6.5min after the cooling is activated. Meanwhile, the sample in the glass capillary is cooled as the fixing component 1 is cooled from 18.6°C to approximately -27°C, and maintained in a stable temperature state after 20min.

### Example 3

Based on the cooling apparatus for the flame sealing method of the glass capillary shown in the example 1, the present example explored and optimized the material, the thickness, and the like of the thermally-conductive metal plate 3.

Optionally, the thermal conductivity of the thermally-conductive metal plate 3 is not less than 200W/m·K. The higher thermal conductivity coefficient not only enables a buffer plate to rapidly dissipate heat from a heat source to improve the cooling efficiency, but also enables the heat to be uniformly distributed to improve the stability of the cooling apparatus for overall cooling. In the optional example of the present example, the thermal conductivity coefficient of the thermally-conductive metal plate 3 ranges from 200W/m·K to 450W/m·K.

Optionally, the material of the thermally-conductive metal plate 3 is copper, a copper alloy, aluminum, an aluminum alloy, ceramic, a composite material (such as a carbon fiber/metal-based composite material, carbon fiber-reinforced aluminum (CF/Al), carbon fiber-reinforced copper (CF/Cu) and the like), graphene (such as a graphene/metal composite material, graphene-copper (Gr-Cu), graphene-aluminum (Gr-Al) and the like), or a combination thereof, further optionally, copper, aluminum or an aluminum alloy. Considering that the thermally-conductive metal plate 3 made of the copper may be rusted in long-term use, the material of the thermally-conductive metal plate 3 is preferably the aluminum or the aluminum alloy.

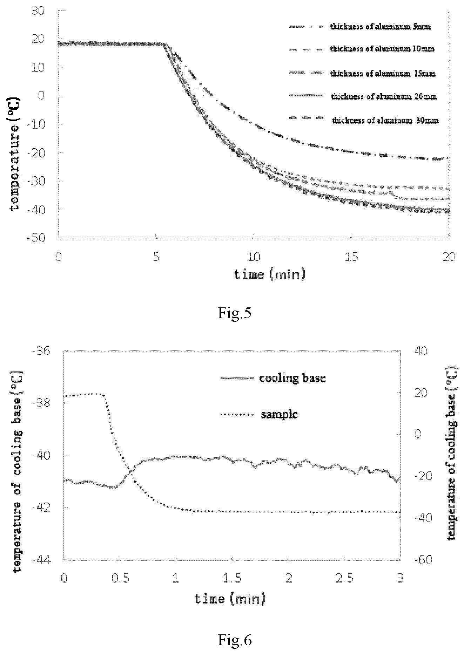

Based on a large amount of experimental data, the research and development team of the present disclosure explored and optimized the thickness of the thermally-conductive metal plate 3. Particularly, the first cooling component 2 includes a four-stage electric cooler, wherein the electric cooler has a voltage of 12V and a power of 80W. The second cooling component 4 includes a two-stage series-connected electric cooler, wherein the electric cooler has a voltage of 12V and a power of 100W. The thermally-conductive metal plate 3 is an aluminum plate. Experimental results of an influence of different thicknesses of the thermally-conductive metal plate 3 on a temperature change of the fixing component are shown in FIG. 5.

It can be verified from FIG. 5 that the thickness of the thermally-conductive metal plate 3 has a greater influence on the cooling effect on the fixing component 1 when being relatively small, while the thickness of the thermally-conductive metal plate 3 has a little influence on the temperature of the fixing component 1 when being more than 15mm. Particularly, when the thickness of the thermally-conductive metal plate 3 is 5mm, the lowest temperature of the fixing component 1 is -22°C, and other thicknesses make the time required for the fixing component 1 to reach -30 °C be 8.3min, 7.1min, 6.1min and 5.9min, respectively.

The fitting is performed based on this experimental result, optionally, the thickness L of the thermally-conductive metal plate 3 and the time t required for cooling the fixing component 1 to -30°C meet the following equation:
$t = 8.736 ⋅ {\left(L-7.83\right)}^{- 1.011} + 5.5 ;$
wherein t represents time required for cooling the cooling base to -30°C (in min), and L represents thickness of the thermally-conductive metal plate 3 (in mm).

Further optionally, the thickness of the thermally-conductive metal plate 3 ranges from 10mm to 100mm, preferably, 10mm to 30mm, more preferably, 20mm.

### Example 4

The cooling apparatus for the flame sealing method of the glass capillary as shown in any one of examples 1 to 3 is employed. The present example illustrates a flame sealing process of the glass capillary under specific working conditions. It should be noted that the present example is only a preferred demonstration, and therefore does not limit the scope of protection of the present disclosure.

A flame sealing method of a glass capillary includes pre-processing and thermal closing, wherein the pre-processing operation includes the following steps:
step 1, activating a first cooling component 2 and a second cooling component 4 to cool a fixing component 1 of the cooling apparatus for the flame sealing method of the glass capillary to be not higher than -30°C, wherein the first cooling component 2 including a four-stage series-connected electric cooler and the second cooling component 4 including a two-stage parallel-connected electric cooler are used in the present example, wherein the electric cooler of the first cooling component 2 has a voltage of 12V and a power of 80W, the electric cooler of the second cooling component 4 has a voltage of 12V and a power of 100W, and the thermally-conductive metal plate 3 is an aluminum plate with a thickness of 20mm; and
step 2, placing one end of the glass capillary loaded with a to-be-tested sample in a groove 11 of the fixing component 1 and making the other end of the glass capillary extend out of the groove 11, and obtaining a to-be-closed glass capillary after the temperature of the fixing component 1 is stabilized, wherein after the fixing component 1 is cooled until the temperature is stabilized, the glass capillary loaded with the sample is placed in the fixing component 1, and the sample is rapidly cooled to a low temperature. It should be understood that, due to relatively high initial temperature of the sample and heat exchange of the fixing component 1 with the glass capillary due to the thermal contact with the glass capillary, fluctuations in the temperature of the fixing component 1 will be caused. FIG. 6 shows a graph of a temperature change of the fixing component 1 and a sample in the glass capillary in the step 2.

FIG. 6 shows that when the glass capillary loaded with the sample is placed in the fixing component 1, the temperature of the sample is substantially stabilized at -37°C after 1min, while the temperature of the fixing component 1 is increased from -40.9°C to a maximum of -40°C, and then restored to a stable state (-40.9°C). In this way, it can be verified that in the flame sealing process of the glass capillary of the present disclosure, the process of loading the glass capillary into the already cooled fixing component 1 can rapidly and efficiently cool the sample in the glass capillary, and the temperature fluctuation of the fixing component 1 during the overall process of loading the sample is less than ± 2°C. The process is simple in overall operation and high in stability.

It should be noted that the present disclosure does not limit a sequential order of activating the first cooling component 2 and the second cooling component 4, which can be selected by those skilled in the art as required. In an optional example of the present disclosure, the first cooling component 2 and the second cooling component 4 are activated simultaneously.

It should be understood that the pre-processing operation in the present example may include the following steps:
S1, placing one end of the glass capillary loaded with the to-be-tested sample in the groove 11 of the fixing component 1 of the cooling apparatus for the flame sealing method of the glass capillary and making the other end of the glass capillary extend out of the groove 11; and S2, activating the first cooling component 2 and the second cooling component 4 to cool the fixing component 1 to be not higher than -30°C so as to obtain a to-be-closed glass capillary. The example 2 of the present disclosure presents an example of a temperature change of the fixing component 1 and the sample after the glass capillary is loaded and then the cooling component is activated.

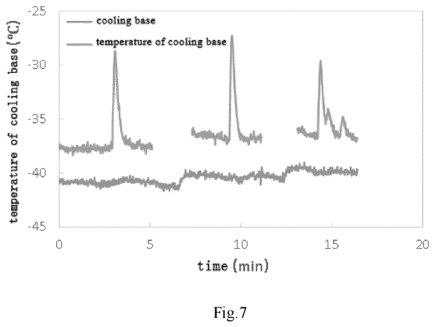

The thermal closing operation includes: melting and sealing a portion of the to-be-closed glass capillary extending out of the groove 11 by employing high-temperature flame. Further, the temperature change of the fixing component 1 and the sample is tested during the flame sealing in the present example, and results are shown in FIG. 7.

It should be understood that the glass capillary loaded with the sample is placed in the groove of the fixing component 1. When the glass capillary is sealed by the high-temperature flame, since the flame locally heats the glass capillary to over 1000°C and the glass capillary has a certain thermal conductivity, it is highly likely that the temperature of the chemical at the bottom of the glass capillary will be increased, causing a reaction of thermal decomposition. Moreover, thermal contact of the glass capillary with the fixing component 1 will cause the temperature fluctuation of a cooling base. It can be verified from FIG. 7 that in the flame sealing process of the glass capillary using the cooling apparatus for the flame sealing method of the glass capillary of the present disclosure, the temperature fluctuation of the fixing component 1 is less than ± 1°C, the temperature of the sample inside the glass capillary is slightly increased but remains below -25°C. The temperature fluctuation due to the thermal closing of the other end of the glass capillary can be rapidly restored to a stable state within approximately 30s. Therefore, the flame sealing method of the glass capillary of the present disclosure can effectively keep the temperature of different samples being below 0 °C in the flame sealing process of the glass capillary, thereby preventing the chemical from being thermally decomposed and ensuring the subsequent analysis and detection stability.

The flame sealing method of the glass capillary of the present disclosure is convenient to operate, high in cooling response speed, stable in cooling effect and excellent in practicability, can be reused so as to prevent materials with high safety risk and high cost, such as liquid nitrogen or dry ice, from being used, and has important popularization and application values.

It should be noted that the above is a further detailed description of the present disclosure in combination with the specific examples. It should not be concluded that the specific examples of the present disclosure are limited to these descriptions only. Those ordinarily skilled in the art can make a number of simple improvements without departing from the concept of the present disclosure, which should be regarded as belonging to the scope of protection of the present disclosure.

## Claims

1. A cooling apparatus for a flame sealing method of a glass capillary, comprising:
a fixing component for carrying the glass capillary, wherein a groove for connecting the glass capillary is provided in an upper surface of the fixing component, and the depth of the groove is smaller than the length of the glass capillary;
a cooling portion used for indirectly cooling the glass capillary and capable of cooling the fixing component to be not higher than -30°C within 5min to 20min, wherein the cooling portion comprises:
a first cooling component located below the fixing component and being in contact with a lower surface of the fixing component, wherein the first cooling component comprises a multi-stage series-connected electric cooler;
a thermally-conductive metal plate located below the first cooling component and being in contact with a lower surface of the first cooling component;
a second cooling component located below the thermally-conductive metal plate and being in contact with a lower surface of the thermally-conductive metal plate, wherein the second cooling component comprises a multi-stage parallel-connected electric cooler; and
a thermally-dissipative component connected to a lower surface of the second cooling component.

2. The cooling apparatus for a flame sealing method of a glass capillary according to claim 1, wherein the first cooling component comprises a two-stage electric cooler through a six-stage electric cooler.

3. The cooling apparatus for a flame sealing method of a glass capillary according to claim **1,** wherein the first cooling component has a voltage of 5V to 36V and a power of 40W to 150W; and
preferably, the first cooling component has a voltage of 12V and a power of 80W.

4. The cooling apparatus for a flame sealing method of a glass capillary according to claim **1,** wherein the second cooling component comprises a two-stage electric cooler through a four-stage electric cooler.

5. The cooling apparatus for a flame sealing method of a glass capillary according to claim **1,** wherein the second cooling component has a voltage of 5V to 36V and a power of 60W to 250W; and
preferably, the second cooling component has a voltage of 12V and a power of 200W

6. The cooling apparatus for a flame sealing method of a glass capillary according to claim **1,** wherein the thermal conductivity coefficient of the thermally-conductive metal plate is not less than 200W/m·K, preferably, ranges from 200W/m·K to 450W/m·K; and
preferably, the material of the thermally-conductive metal plate is copper, a copper alloy, aluminum, an aluminum alloy, ceramic, a composite material, graphene or a combination thereof.

7. The cooling apparatus for a flame sealing method of a glass capillary according to claim 1, wherein the thickness L (in mm) of the thermally-conductive metal plate and the time t required for cooling the fixing component to -30°C meet the following equation: $t = 8.736 ⋅ {\left(L-7.83\right)}^{- 1.011} + 5.5 ;$ preferably, the thickness of the thermally-conductive metal plate ranges from 10mm to 100mm, preferably, from 10mm to 30mm, more preferably, 20mm.

8. The cooling apparatus for a flame sealing method of a glass capillary according to claim 1, wherein the fixing component further comprises a fastener for socketing an upper end of the groove and a portion of a glass column; and/or,
the fixing component is externally provided with an insulation housing; and/or,
the thermally-dissipative component is a fan radiator, a liquid-cooled radiator or a heat pipe radiator.

9. A flame sealing method of a glass capillary, comprising pre-processing and thermal closing, wherein
S1, placing one end of a glass capillary loaded with a to-be-tested sample in a groove of a fixing component of the cooling apparatus for a flame sealing method of a glass capillary according to any one of claims 1 to 8 and making the other end of the glass capillary extend out of the groove; and
S2, activating a first cooling component and a second cooling component to cool the fixing component to be not higher than -30°C so as to obtain a to-be-closed glass capillary; and
the thermal closing operation comprises: melting and sealing a portion of the to-be-closed glass capillary extending out of the groove by employing high-temperature flame.

10. A flame sealing method of a glass capillary, comprising pre-processing and thermal closing, wherein
the pre-processing operation comprises the following steps:
step 1, activating a first cooling component and a second cooling component to cool a fixing component of the cooling apparatus for a flame sealing method of a glass capillary according to any one of claims 1 to 8 to be not higher than -30°C; and
step 2, placing one end of a glass capillary loaded with a to-be-tested sample in a groove of the fixing component and making the other end of the glass capillary extend out of the groove, and obtaining a to-be-closed glass capillary after the temperature of the fixing component is stabilized; and
the thermal closing operation comprises: melting and sealing a portion of the to-be-closed glass capillary extending out of the groove by employing high-temperature flame.
